# EUROPEAN PATENT APPLICATION

(11) **EP 4 810 941 A1**
(43) Date of publication of application: **23.09.2026**
(21) Application number: 25300030.1
(22) Date of filing: 21.03.2025
(51) Int. Cl.: G01N 21/552, G01N 21/77, G01N 21/45

(54) **WAVEGUIDE FOR THE ANALYSIS OF BIOLOGICAL SAMPLES**

(71) Applicant: Bialoom Ltd, Nicosia (CY)
(72) Inventor: MANOLIS, Athanasios, 56121 Thessaloniki (GR); TSIOKOS, Dimitris, 15343 Agia Paraskevi (GR); USTUNER, Serife, 2534 Hamitkoy, Nicosia (CY); ELRABIAAY, Mahmoud A., Smouha, Alexandria (EG); ELEFTHERIOU, Christia, 4876 Limassol (CY)
(74) Representative: Grassi, Stefano

(57) **Abstract**

A waveguide (1) for the analysis of biological samples comprises a plasmonic sensor (2) presenting a binding surface (B) configured to receive and retain at least one kind of recognition elements (A) configured to bind selectively to a respective marker of the biological sample and a cladding (3) surrounding the plasmonic sensor (2) and defining a channel for the flowing the biological sample over the plasmonic sensor (2). The waveguide (1) further comprises at least one between a first coating layer (4a) coupled to the binding surface (B) and configured to attract the recognition elements (A) and a second coating layer (4b) coupled to the cladding (3) and configured to repel the recognition element.

## Description

### Technical field of the invention

The present invention pertains to the technical field of photonic integrated circuits that use silicon photonics technology and plasmonics to implement a refractive index sensor on a planar chip.

Specifically, the refractive index sensor is transformed into a biosensor by applying specific binding chemistry on the sensing (plasmonic) surface thus providing an integrated plasmo-photonic biosensor.

Such a sensor can be advantageously implemented for medical analysis of fluid from a patient (e.g. blood, saliva, urine) and/or for food diagnostics, environmental monitoring or any other possible biochemical detection and measurement.

### Background art

One of the main problems to be addressed in the technical field of sensors is that of providing accurate and precise measurements.

Consequently, there is a great need for innovative solutions able to improve the sensitivity and precision of sensors, especially those meant to be implemented as biosensor for the detection of specific biochemical components and/or markers.

Furthermore, the increase in performances is commonly negatively counterbalanced by a corresponding increase in cost and complexity of the device.

As such, to develop a satisfactorily marketable product it is necessary to find novel ways to address the issue of performances without causing an excessive increase in its cost and complexity.

A kind of sensors of particular interest is that of optical interferometric sensors, which are characterized by the presence of a sensing arm wherein an analyte to be analysed, e.g. a biological sample, can be allocated and a reference arm that provides a baseline for the analysis. An optical signal can be fed to the interferometric sensors and split according to various techniques into the sensing and the reference arm. Then by evaluating the output signal of the sensing arm against the one from the reference arm it is possible to acquire information about the analyte based on how the optical signal interacted with it.

Exploiting recent advances in nano-fabrication, plasmonic and photonic waveguide devices can be implemented into interferometric sensors, especially to be used as biosensors, to exploit phase dependence of the optical field at the waveguide to changes in refractive index of analytes under test.

In this context one of the biggest challenges is that of correctly and efficiently functionalize the waveguides to allow them to optimally interact with the markers of interest contained in the analyte.

Said functionalization is carried out depositing on the sensing portion of the waveguide a droplet containing recognition elements that then bind with the sensing portion allowing the same to interact and capture the marker of interest.

However, said procedure still presents considerable hurdles as it is not yet possible to guarantee an optimal application of the recognition elements mainly, but not only, because the droplet tends to spread causing only a limited amount of recognition elements to be actually deposited over the sensing portion.

Another challenge comes when the same type of sensing surface is used for different types of functionalization approaches and recognition elements. Optimization of different types of material parameters is required for different types of functionalization approaches.

In view of the above, this kind of device still requires major innovation to improve their overall quality without impacting their complexity and cost.

### Disclosure of the invention

In this context, the technical purpose which forms the basis of this invention is to provide a plasmonic waveguide with improved performances guaranteed by a novel structure that does not cause an unreasonable increase in complexity and fabrication costs.

In particular, the present invention discloses a waveguide for the analysis of biological samples that essentially comprises a plasmonic sensor and a cladding.

The plasmonic sensor presents a binding surface configured to receive and retain at least one kind of recognition elements.

The recognition elements are in turn configured to bind selectively to a respective marker of the biological sample.

Preferably, the waveguide already also comprises the recognition elements bound to the binding surface.

The cladding surrounds the plasmonic sensor.

Advantageously, the waveguide further comprising at least one between a first coating layer coupled to the binding surface and a second coating layer coupled to the cladding.

The first coating layer is configured to attract at least one kind of recognition elements, while the second coating layer is configured to repel said at least one kind of recognition elements.

Preferably, said effect is achieved by way of hydrophobicity, having the first coating layer configured to decrease the hydrophobicity of the binding surface so as to make it lower than that of its surrounding environment (the cladding in particular) and the second coating layer configured to increase the hydrophobicity of the cladding so as to make it higher than that of the binding surface.

Advantageously, the proposed solution guarantees an optimal interaction between the recognition elements and the binding surface so that a maximum of recognition elements can actually bind to the binding surface, thus improving the sensing capability of the sensor.

### Brief description of drawings

Further features and advantages of this invention are more apparent in the detailed description below, with reference to a preferred, non-restricting, embodiment of an optical interferometric sensor as illustrated in the accompanying drawings, in which:
- Figures 1 to 3 show various possible embodiments for the claimed waveguide sensor;
- Figures 4 and 5 provide a detailed view of an aspect of the waveguide;
- Figure 6 shows more in detail a possible embodiment for one of the components of the sensor.
- figure 7 shows a schematic diagram of an optical interferometric sensor comprising the claimed waveguide.

### Detailed description of preferred embodiments of the invention

The present application focuses on a waveguide for the analysis of biological samples.

The waveguide is associated in the accompanying drawings with the reference number 1 and will be indicated in the following simply as waveguide 1.

From a structural point of view, the waveguide 1 essentially comprises a plasmonic sensor 2, a cladding 3 and a coating layer.

The plasmonic sensor 2 represents the active part of the waveguide 1 upon which the actual detection and analysis is performed, while the cladding 3 contributes at least in part to define a substrate/seat that encloses the plasmonic sensor 2 and is configured to waveguide light in and out of the plasmonic sensor.

More in detail, the plasmonic sensor 2 presents a binding surface B configured to receive and retain at least one kind of recognition elements A, which are in turn configured to bind selectively to a respective marker of the biological sample.

According to an aspect of the waveguide 1, the plasmonic sensor 2 also comprises the above-mentioned recognition elements A, said recognition elements A being coupled to the binding surface B, or alternatively they can be provided separately so that the end user may apply and bind to the binding surface B specific recognition elements selected based on the measurement that will be carried out.

Operatively, the recognition elements A are applied on the binding surface B via deposition of a droplet inside of which the recognition elements A are dispersed.

To this end, the sensor may further comprise a micro dispenser configured to deposit on the binding surface B a droplet comprising at least one kind of recognition elements A.

Consequently, in a ready-to-use configuration, the binding surface B comprises at least one kind of recognition elements A, preferably biorecognition elements A, configured to interact with and bind to a respective marker of the biological sample specifically and selectively.

In other words, the binding surface B comprises a plurality of elements selected/designed to interact with and bind to one or more substances, the markers, which the analysis being carried out aims to detect in the biological sample.

As an example, the biorecognition elements A may comprise at least one of the following: one or more antibodies, oligonucleotide probes (DNA, RNA, mRNA etc.), aptamers.

If the marker is present in the biological sample, it is captured by the binding surface B, specifically by the recognition elements, and can be then detected as its presence will affect, for example, an optical signal that passes through the waveguide 1.

According to a preferred embodiment of the present application, the binding B surface presents a tridimensional structure that increases the exposed surface that can interact with the biological sample.

Specifically, the binding surface B may comprise a tridimensional structure (e.g. Poly-lysine or Dextran grafted with linkers such as Biotin or DBCA, for the conjugation of antibodies or oligonucleotidesor the conjugation is achieved via electrostatic attraction forces between the charged polymer and the oppositely charged bio-recognition molecule) defining a surface apt to support the (bio)recognition elements configured to bind the marker. According to a possible embodiment of the present application, the binding surface B comprises a tridimensional structures.

In this particular context the recognition elements A (for example a plurality of antibodies) are coupled to the tridimensional structure T2.

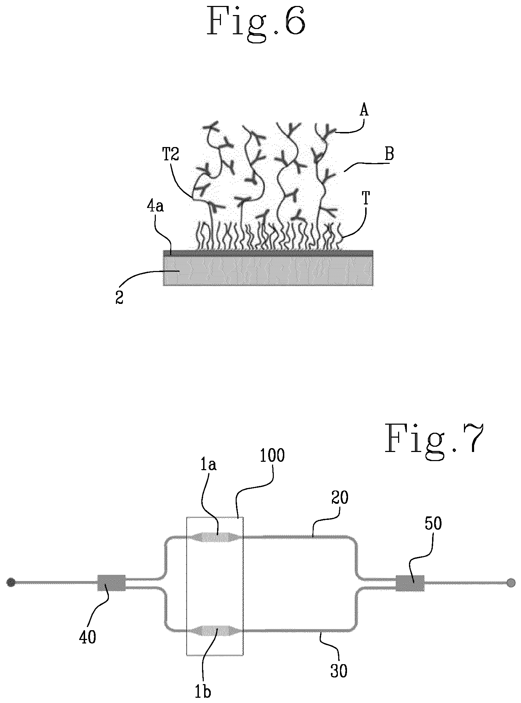

In general, the above discussed tridimensional structures may be constituted by a plurality of filament, as specifically shown in figure 6, or any analogous structure that provide for an increase in the active surface of the sensor 1, e.g. brush-like, tree-like, mesh-like structures, other 3D structures (polymers).

Advantageously, the binding surface may further comprise other tridimensional structure T not coupled to recognition elements A.

Said further tridimensional structure T contributes and helps improving an anti-fouling property of the coating layer

In general terms, the plasmonic sensor 2 can be coupled to and carry one kind of recognition elements A, however, it is also possible for the waveguide 1 to comprise more than just one plasmonic sensor 2.

In this scenario, each plasmonic sensor 2 is enclosed by the same cladding 3 and may be coupled to a respective and different kind of recognition elements A, so that different areas of the waveguide 1 are configured to interact with different marker of the biological sample. Alternatively, a singe plasmonic sensor 2 can be divided into a plurality of portion, each portion being configured to carry a respective kind of recognition element.

In general, the waveguide 1 may be functionalized to interact with only one marker of the biological sample, or with multiple distinct marker of said biological sample, either by providing a plurality of plasmonic sensors 2 each one independently and individually coupled to a respective kind of recognition elements A, or by providing a single plasmonic sensor 2 with distinct portion each coupled to a respective kinds of recognition elements A.

Turning now to the cladding 3, it surrounds the plasmonic sensor 2 (or the plasmonic sensors 2 if more than one is present).

Operatively, the cladding 3 defines a seat that contains the plasmonic sensor 2 and concurs to define a path along which the biological sample can flow passing over the plasmonic sensor 2 so as to interact with the recognition elements A coupled to the binding surface B. Advantageously, the waveguide 2 further comprises at least one between a first coating layer 4a and a second coating layer 4b.

The first coating layer is applied and coupled to the binding surface, whilst the second coating layer 4b is instead applied and coupled to the cladding 3.

In particular, it is the plasmonic sensor 2 that comprises, when present, the first coating layer 4a, so that the upper/exposed surface of the coating layer ends up defining, or concurring to define, the binding surface B of the plasmonic sensor 2.

Said coating layers 4a, 4b are configured to improve the functionalization process of the plasmonic sensor 2, insofar they promote an optimal containment of the recognition elements A on the binding surface B, thus guaranteeing that said recognition elements A actually bind with the binding surface B and are not lost or dispersed over the cladding 3.

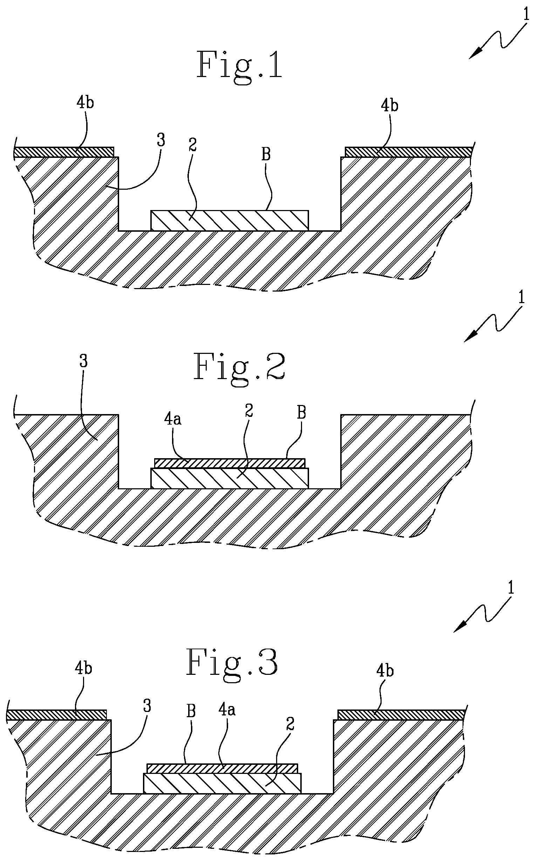

In detail, as depicted in figure 2, the waveguide 1 comprises the first coating layer 4a coupled to the binding surface B, said first coating layer 4a being configured to attract at least one kind of recognition elements A. Alternatively, as depicted in figure 2, the waveguide 1 comprises the second coating layer 4b coupled to the cladding 3, said second coating layer 4b being configured to repel the recognition elements A. Alternatively, as depicted in figure 3, the waveguide 1 comprises both the first coating layer 4a and the second coating layer 4b to provide at the same time both effect of attracting the recognition elements on the binding surface B and repelling them from the cladding 3.

In this situation, and in general the whenever the first coating layer 4a is applied, it is possible that the same spread also on the surrounding of the sensor 2 (for sake of simplicity and clarity the first coating layer 4a depicted in the figures extends only on the sensor 2).

Advantageously, further to improving the efficiency of the functionalization process, the coatings 4a, 4b also provide protection for the exposed surfaces of the waveguide 1 preventing potential oxidation, other material degradation and/or reducing thermal effects during use.

Said coating layers 4a, 4b have a thickness comprised between one monolayer and 400 nanometers.

This specific range allows at the same time the waveguide 1 to operate efficiently (i.e. without impacting the results of the measurements that are going to be carried out with it) and being impactful in optimizing the functionalization of the binding surface B. Different values within this range affects the decay length of the evanescent field (and may be subsequently used as a design parameter to optimize/tune the surface sensitivity of the sensor depending on the target analyte size.

According to a preferred embodiment of the present application, the attraction and repulsion effect provided by the coating layers 4a, 4b is obtained through a fine tuning of the hydrophobicity of the surfaces of the waveguide 1.

In particular, the first coating layer 4a may comprise a material having the same or lower hydrophobicity than the hydrophobicity of any surface of the cladding facing the channel.

The lower hydrophobicity of the binding surface B guarantees that when the droplet (or group of droplets/spots) containing the recognition elements A is deposited over the sensor 2, it remains contained over said binding surface B without spreading all over the waveguide 1.

Thus all the recognition elements A comprised in the droplet (or group of droplets) remain over the binding surface B and can bind with it maximizing the recognition efficiency of the waveguide 1 as an optimal amount of all the available recognition elements A will be operative and able to capture the markers of interest in the biological sample. Correspondingly, the second coating layer 4b may comprises a material having a higher hydrophobicity than the hydrophobicity of the binding surface B (or higher than the first coating layer 4a if present).

Also in this context, the binding surface B will end up having a lower hydrophobicity compared to its surrounding environment and thus the droplet containing the recognition elements will be once again confined on said binding surface B allowing to obtain the same results indicated above for the previous embodiment.

According to a further embodiment, both the first coating layer 4a and the second coating layer 4b are present and they are configured to either provide a higher hydrophobicity in the cladding 3 area than in the plasmonic sensor 2 area or alternatively to provide the same hydrophobicity so as to at least equalize the hydrophobicity of the cladding 3 and of the binding surface B.

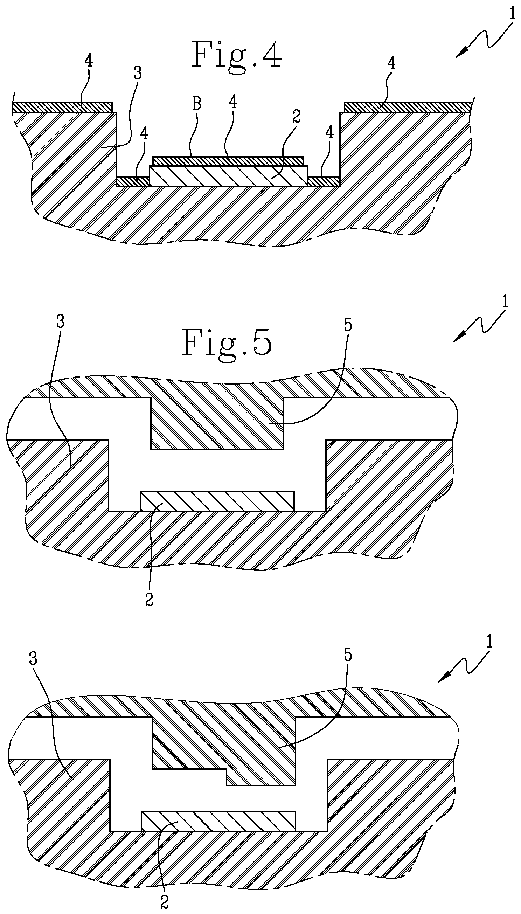

In this specific scenario, shown in figure 4, the coating layers 4a, 4b may also form a single coating layer (identified for simplicity in figure 4 with the reference number 4) which is made of the same material and covers entirely the exposed surface of the waveguide 1 (at least in the area comprising and surrounding the sensor 2), so as to guarantee that the entire surface of the waveguide 1 presents the same hydrophobicity value. In other words, according to this embodiment, the waveguide comprises one coating layer applied over both the sensor 2 and the cladding 3 and also on every surface positioned between said sensor 2 and cladding 3. This feature significantly simplifies the fabrication of the waveguide 1, as a single coating is applied over the entire waveguide 1 (as such no particular patterning is required) and furthermore any gap between the sensor 2 and the cladding 3 is also coated, thus guaranteeing that the functionalization is actually performed on the sensor 2, without having recognition elements A being specifically attracted over the cladding 3 or towards the gap between the surface of the sensor 2 and the cladding 3.

It is to say that in this context the coating layers 4a, 4b may be applied so that the hydrophobicity of the entire waveguide 1 is the same causing the droplet to not be attracted over the cladding 3.

In general terms, the waveguide 1 disclosed here within comprises a cladding 3 that overall presents a hydrophobicity higher (or at least equal) to the hydrophobicity manifested by the binding surface B so as to guarantee an optimal confinement of the recognition elements A on said binding surface B.

Alternatively, as indicated above, the first coating layer 4a is different from the second coating layer 4b so as to obtain a lower hydrophobicity on the binding surface B compared to the hydrophobicity of the cladding 3 allowing a better retention of the droplet, thus of the recognition elements A, over it.

In general, the approach discussed above allows to immobilize the recognition elements A over the surface of the sensor 2 via a mechanism of physisorption thanks to the relative hydrophobicity of the sensor 2 and the surrounding cladding 3 that traps the recognition elements A over the sensor 2.

In this context, the first coating layer 4a may also be used to increase the hydrophobicity of the sensor 2 (helping the physisorption of the recognition element A) while taking care of retaining an overall hydrophobicity of the sensor 2 lower than that of the cladding 3. It is to say that if the first coating layer 4a increases the hydrophobicity of sensor 2 to values higher than that of cladding, then it will also be applied the second coating layer 4b so as to increase the hydrophobicity of the cladding 3 to values higher that of coating 4a.

In general, it is retained the overall principle that hydrophobicity on the cladding 3 is higher than that of the sensor 2.

Additionally or alternatively, the first coating layer 4a comprises a material configured to promote the formation of hydroxyl groups.

In this context, the waveguide 1 further comprises a silane based overlayer applied over the first coating layer 4a.

Silane chemistry have been found to improve the binding of the recognition elements to the biding surface B and can thus improve the efficiency of the plasmonic sensor 2.

Additionally or alternatively, the first coating layer 4a comprises a polymer (eg Poly-lysine, Dextran)

This specific embodiment is of particular interest when the analysis of the biological sample is carried out to detect oligonucleotide strands (DNA, RNA or microRNAs).

In particular, the immobilization of oligonucleotide strands on the binding surface B, is achieved by first depositing the coating layer 4a comprising the polymer (e.g. PLL or Dextran) ,

The oligonucleotide is then immobilized on the polymer that is being readily grafted with a linker (e.g Biotin or DBCO) or by adopting the electrostatic attraction forces between the negatively charged DNA and positively charged polymer such as in case of using the Poly-lysine.

In general, to obtain the above effects and provide the various embodiments presented in the previous paragraphs, the skilled person may select the material of the coating layers 4a, 4b so as to comprise at least one of the following: oxides, (silicon dioxide), dielectrics (silicon nitride), compounds (Aluminum Oxide), different types of polymers (fluorinated polymer, poly-lysine, dextran, Polymethylmethacrylate, Polydimethylsiloxane, epoclad^{®}, Teflon^{®}).

Further to the above, the waveguide 1 may also comprise a striction element 5 that, as depicted in figure 4, is positioned or develops over at least the biding surface B reducing the thickness of the channel for the flowing of the biological sample at least over the binding surface B.

The above provide two concurring effects: the first one is that of containing the droplet with the recognition elements A on the binding surface B, thus promoting the interaction of said recognition elements A with the binding surface B, and the second one is that of reducing the section of the channel through which the biological sample flow guaranteeing that a larger portion of it interacts with the recognition elements A.

As such the striction element 5 synergistically cooperates with the coating layers 4a, 4b to improve the sensitivity of the waveguide 1 as they both cooperate to improve the binding of the markers to the recognition elements A.

As shown in figure 5, a thickness of the striction element 5 may also increase, for example in a step-like manner, along a flowing direction of the biological sample over the plasmonic sensor.

In this way the thickness of the flowing channel goes down progressively making it difficult for bigger markers to progress, while improving the diffusion of the molecules to the binding surface.

In this context it is possible to functionalize the plasmonic sensor 2 so as to interact with bigger markers in the larger part of the channel (the one on the left in figure 5) and with smaller markers in the thinner part of it (the one on the right in figure 5).

The bigger markers will then be contained in the first portion of the channel allowing the recognition elements A to interact with them more easily whilst at the same time the smaller markers move on towards an area where they can freely interact with their own recognition elements A without the interference of the bigger markers.

In this context, the two different area of the waveguide 1 may comprise two different and distinct sensor 2 each one functionalized with a respective recognition element meant to interact with smaller or bigger markers.

In particular, the waveguide 1 may comprise a plurality of sensors 2, each one functionalized with a different recognition element A and the striction element has a thickness increasing in a step-like manned and each step cover (i.e. is positioned above) at least a portion of just one single sensor 2.

It is to say that each step may cover only partially or completely at least a single sensor 2.

It is to say that a single step may cover just a portion of a single sensor 2, the entirety of a single sensor 2, distinct portions on two or more different sensor 2, the entirety of a plurality of sensors 2 or any combination thereof.

In general a single step may cover any area of the waveguide 1 functionalized to interact with markers having the same size.

In general, the striction element 5 reduces the thickness of the channel to a value comprised between 1 nm and 1mm.

Advantageously, the striction element 5 allows to improve the efficiency of the waveguide 1 in its interaction with the sample to be analyzed and as such can be implemented even independently, e.g without, the coating layer 4.

In other words, it is possible to have a waveguide 1 comprising a plasmonic sensor 2, a cladding 3 (both according to any of the specific described above) and a striction element 5 that improves the measurement efficiency of the device.

Further to the above, it is noted that surface sensitivity is directly connected with the size of the target analyte.

In general, the waveguide 1 possesses the capability to efficiently recognize and detect a wide range of target analytes, including proteins (CRP), small molecules (toxins), oligonucleotide biomarkers (DNA, RNA, microRNAs) viruses (Covid-19 coronavirus), bacteria (E. coli), fungi (Candida albicans) and other types of cells (exosomes).

This capability is a consequence of the combination of features described above

In particular, a fine tuning of the thickness of the first coating layer 4a and the materials it comprises allow to modify the decaying length of the evanescent electrical field generated by an optical signal interacting with the waveguide 1 allowing to tune and optimize a corresponding sensitivity of the waveguide 1.

Further to the above, it is also disclosed an optical interferometric sensor, depicted in figure 7, indicated in the following simply as interferometer.

In general, the interferometer, which may be of the Mach-Zehnder type, the Michelson type or the bimodal type, presents a first optical path 20 that defines a sensing arm and second optical path 30 defining a reference arm.

In other words the interferometer presents a first optical path 20 along which a analyte can be allocated and a second optical path 30 that provide a reference for the measurements that are performed on the sample. Furthermore, the sensing arm and the reference arm presents a different length allowing to obtain a resonance in the recombined optical signal.

In general, the smaller the path difference is between the sensing and the reference arm of the interferometer, the larger the FSR becomes, resulting in higher interferometer sensitivity.

From a structural point of view, the interferometer comprises an optical splitter 40 placed upstream of both the first and second optical paths 20, 30 and configured to split an incoming optical signal equally into the sensing arm and the reference arm.

Consequently, the interferometer may comprise an input line, for example an optical fiber, which can be coupled to an optical source, for example a tunable laser source or a broadband source (LED) to feed the optical signal to the interferometer.

The optical source may be an external source connected to the interferometer via the input line or directly in free space or the interferometer itself may comprise an integrated optical source to generate the optical signal without the need of being connected to a further device.

In use, the interferometer receives the optical signal from the light source and the optical splitter equally split said signal into the sensing arm, where it will interact with the biological sample to be analyzed, and into the reference arm.

Downstream from the sensing arm and the reference arm the interferometer also comprises an optical combiner 50 configured to recombine said optical signal after its components have travelled through the respective arm.

The recombined optical signal can then be processed to determine the properties of interest of the sample.

To this end, the interferometer can also comprise and/or be connected to one or more optical sensors configured to receive the recombined optical signal and preferably to determine/calculate at least one parameter representative of the recombined optical signal that can then be processed to identify the relevant properties of the biological sample.

Further to the above, the interferometer also comprises two waveguides 1 and in particular a first waveguide 1b that presents any of the features disclosed above but is not functionalized and is positioned along the second optical path 30.

In other words, the first waveguide 1a is a waveguide 1 according to the present invention but does not comprise any recognition element A.

The second waveguide 1b instead is structurally identical to the first waveguide 1a, but comprises also the recognition elements A coupled to its binding surface B and is positioned along the first optical path 20. Finally, the interferometer comprises a single microfluidic channel 100 running through both the first waveguide 1a and the second waveguide 1b.

## Claims

1. Waveguide (1) for the analysis of biological samples comprising:
- a plasmonic sensor (2) presenting a binding surface (B) configured to receive and retain at least one kind of recognition elements (A) configured to bind selectively to a respective marker of the biological sample;
- a cladding (3) surrounding the plasmonic sensor (2);
the waveguide (1) further comprising at least one between:
- a first coating layer (4a) coupled to the binding surface (B) and configured to attract at least one kind of recognition elements (A); and
- a second coating layer (4b) coupled to the cladding (3) and configured to repel said at least one kind of recognition elements (A).

2. Waveguide (1) according to claim 1, wherein the first coating layer (4a) comprises a material having the same or lower hydrophobicity than the hydrophobicity of any surface of the cladding (3).

3. Waveguide (1) according to claim 1 or 2, wherein the second coating layer (4b) comprises a material having a higher hydrophobicity than the hydrophobicity of the binding surface (B).

4. Waveguide (1) according to any of the preceding claims, wherein the first coating layer (4a) and the second coating layer (4b) comprise respective materials having the same hydrophobicity so as to equalize the hydrophobicity of the cladding (3) and of the binding surface (B).

5. Waveguide (1) according to any of the preceding claims, wherein the first coating layer (4a) comprises a material configured to promote the formation of hydroxyl groups, said waveguide (1) further comprising a silane based overlayer applied over the coating layer.

6. Waveguide (1) according to claims 1, wherein the first coating layer (4a) comprises a polymer grafted with a linker.

7. Waveguide (1) according to any of the preceding claims, wherein said first coating layer (4a) and said second coating layer (4b) comprise at least one among: oxides, dielectrics, compounds, polymers.

8. Waveguide (1) according to any of the preceding claims, wherein the first and second coating layers (4a, 4b) have a thickness comprised between one monolayer and 400 nanometers.

9. Waveguide (1) according to any of the preceding claims, wherein the binding surface (B) comprises a tridimensional structures apt to carry the recognition elements (A).

10. waveguide (1) according to any of the preceding claims, comprising a striction element (5) positioned or developing over at least the binding surface reducing the thickness of the channel for the flowing of the biological sample at least over the binding surface (B).

11. Waveguide (1) according to claim 10, wherein a thickness of the striction element (5) increases along a flowing direction of the biological sample over the plasmonic sensor (2) progressively reducing the thickness of the channel.

12. Waveguide according to claim 11, comprising a plurality of plasmonic sensors (2), wherein the thickness of the striction element (5) increases in a step-like manner, each step covering at least one portion of at least one plasmonic sensor (2).

13. Waveguide (1) according to any of claims 10 to 12, wherein the striction element (5) reduces the thickness of the channel to a value comprised between 1 nm and 1mm.

14. Waveguide (1) according to any of the preceding claims, comprising a micro dispenser configured to deposit on the binding surface (B) at least a droplet comprising at least one kind of recognition elements (A).

15. Waveguide (1) according to any of the preceding claims, wherein the plasmonic sensor (2) comprises at least one kind of recognition elements (A), said recognition elements (A) being associated with the binding surface (B).

16. Optical interferometric sensor presenting a first optical path (20) defining a sensing arm and a second optical path (30) defining a reference arm, said optical interferometric sensor comprising:
- an optical splitter (40) upstream of the first and second optical paths (20, 30) configured to split an incoming optical signal equally into the sensing arm and the reference arm and an optical combiner (50) placed downstream of the first and second optical paths (20, 30) and configured to recombine said optical signal;
- a first waveguide (1a) according to any of the preceding claims 1-13 placed along the first optical path (20);
- a second waveguide (1b) according to claim 14 placed along the second optical path (30);
- a single microfluidic channel (100) running through the first waveguide (1a) and the second waveguide (1b).
